# NEW EUROPEAN PATENT SPECIFICATION

(11) **EP 1 833 999 B2**
(45) Date of publication and mention of the opposition decision: **22.08.2012**
(45) Mention of the grant of the patent: 11.03.2009
(21) Application number: 05813563.3
(22) Date of filing: 16.11.2005
(51) Int. Cl.: C21B 7/20, F27B 1/20, F27D 3/10

(54) **DEVICE FOR DISTRUBUTING MATERIAL INTO A FURNACE**
VORRICHTUNG ZUR VERTEILUNG VON MATERIAL IN EINEM OFEN
DISPOSITIF DE DISTRIBUTION D'UN MATERIAU DANS UN FOUR

(30) Priority: 26.11.2004 EP 04257351
(43) Date of publication of application: 19.09.2007
(73) Proprietor: Siemens VAI Metals Technologies Ltd., Sheffield, South Yorkshire S9 1XU (GB); Siemens VAI Metals Technologies GmbH, 4031 Linz (AT)
(72) Inventor: Fletcher, Jeremy, Stockton-on-Tees TS17 ORT (GB); KIBBLE, Brian, Stockton-on-Tees, TS15 9QJ (GB); SPRENGER, Harald, A-4240 Freistadt (AT); WIEDER, Kurt, A-4311 Schwertberg (AT); WURM, Johann, A-4283 Bad Zell (AT)
(74) Representative: Maier, Daniel Oliver
(86) International application number: PCT/EP2005/012281
(87) International publication number: WO 2006/056350

(56) References cited:
- EP-A2- 0 101 846
- WO-A1-03/002768
- DE-B- 1 261 443
- DE-C- 871 762
- JP-A- 55 011 477
- JP-A- 59 225 281
- US-A- 3 651 964
- US-A- 3 972 426
- US-A- 4 032 024
- US-A- 4 042 130
- US-A- 4 306 827
- US-A- 4 360 305
- PATENT ABSTRACTS OF JAPAN vol. 008, no. 046 (C-212), 29 February 1984 (1984-02-29) -& JP 58 207303 A (SHIN NIPPON SEITETSU KK; others: 01), 2 December 1983 (1983-12-02)

## Description

The present invention relates to a device for distributing material into an enclosure comprising a fixed charging means, a movable charging means, the movable charging means being suspended on gimbals, and at least one actuating means for actuating the gimbal suspension.

For charging material into furnaces or reactors, e.g. like a shaft or metallurgical aggregate reactor, a blast furnace, a melter gasifier or a reduction shaft, or similar devices, it is advantageously or even necessary for the operation of the device to distribute the charging material evenly or according to a certain charging pattern. To this end charging and distribution devices are known from the prior art comprising a movable spout inside the enclosure of the furnace or reactor through which charging material is fed to the furnace or reactor.

From the US 3 972 426 a gimbal suspension of a movable spout is known, having a gear box in which the spout is arranged. The gear box is supported by a first shaft in the casing of the blast furnace. A second shaft is supported by the gear box and is arranged perpendicular to the first shaft. The gear box together with second shaft and spout is tilted around on axis of rotation with the first shaft. To tilt the spout around the second axis of rotation a ring gear is provided in the gear box meshing with a first pinion arranged on a drive shaft and a second pinion arranged on the second shaft. Thus the spout can be tilted in two directions. The first shaft carries the gear box, the second shaft as well as the spout and consequently the shaft and the bearings need to be designed for heavy loads and great torques. Owing to the gear box with the ring gear such a device is bulky and requires quite a lot space within the furnace. Such a device is also heavy which makes it unsuitable for a high speed control of the charging procedure because of the weight and inertia of the charging device. Moreover, the gear box must be cooled in order to withstand the high temperatures within a blast furnace.

US 4 042 130 discloses a charging device with a movable spout which is suspended on an universal joint formed by a spherical surface to which the spout is adjustably attached to. The spout has a bearing which internal surface is slightly concave, having a radius of curvature equal to the radius of the spherical surface so that the bearing fits to the periphery of the spherical surface. The spout is actuated by a minimum of three pressure cylinders which are attached to the spout. Such a device requires accurate manufacture and control of the actuating devices because in case the spherical guide is loose, the system is very slack. On the other hand, in case there is hardly any clearance, a very accurate control of the three actuating devices is necessary to avoid unnecessary high friction in the spherical guide. Such a device is therefore sensitive and difficult to manufacture and control. The US 4 306 827 shows a gimbal suspension of a moveable spout for charging material into a blast furnace. An outer ring is tiltably mounted on the casing of the furnace on two trunnions and carries a tiltably mounted inner ring arranged on a shaft at which inner ring the spout is attached to. The actuating device comprises a multiple jointed drive shaft which is fixed to the shaft of the inner ring. By rotating the drive shaft the outer ring is tilted and by axially displacing the drive shaft the inner ring is tilted. Hence, the spout can be moved to any point within a certain area by tilting the inner and outer ring. The actuating drive can be arranged centred above the spout or side wards. In case it is arranged centred above the spout an off-centre charging to the spout would be necessary which is more complex. If the drive is arranged side wards of the spout a big volume inside the furnace would be required. The drive shaft is for both variants arranged inside the enclosure and is rotatable and moveable in axial direction which makes it necessary to protect the shaft against heat, dust and accretions to ensure functioning of the actuation device.

It is one object of the present invention to overcome the above-described problems of the prior art. A further object of the invention is a device for charging material into an enclosure which is small in size and resistant to high temperatures and dusty atmospheres and which can be integrated into a high speed control of the charging movement.

These objects are solved in a device for distributing material in an enclosure comprising a fixed charging means, a movable charging means the movable charging means being suspended on gimbals, and at least one actuating means for actuating the gimbal suspension by using an inner ring of the gimbal suspension that is tiltably arranged on two tilting means which are mounted on the fixed charging means forming a first axis of rotation and an outer ring of the gimbal suspension that is tiltably arranged on further two tilting means which are mounted on the inner ring forming a second axis of rotation, the outer ring being attached to the moveable charging means wherein two actuating means are provided, each of which comprises an actuating rod and/or a pressure cylinder, the two actuating rods or the two pressure cylinders being angularly displaced and attached to the outer ring or being attached to the outer ring and to the inner ring. Such an arrangement can be designed of light weight and with small dimension which ensures that it can rapidly be moved, hence it may also be employed with a high speed control. Because the inventive device is directly mounted on the fixed charging means it is small in size and requires only little space inside the enclosure.

Provding two actuating means makes the control of the movement of the moveable charging means easier. Each of the actuating means advantageously comprises an actuating rod and/or a pressure cylinder, which are angularly displaced and attached to the outer ring or inner ring.

An especially advantageous arrangement shows actuating rods which are angularly displaced from the first and second axis of rotation, which are preferably arranged perpendicularly. This allows an easy control of the moveable spout simply by employing basic mutual dependent mathematical functions which is even easier when the angular displacement of the first actuating rod to the second actuating rod is set to substantially 90° and the angular displacement of the first actuating rod to the first axis is set in range of 0° to ±90°, preferably substantially ±45°.

When the actuating rods are arranged substantially vertically it is possible to arrange them very close to the fixed chute which is a very space saving arrangement.

In case the driving means comprises a pressure cylinder, preferably arranged substantially horizontally, and a movement transformation means for transforming the, preferably horizontal, movement of the pressure cylinder into the vertical movement of the actuating rod it is possible to arrange the drive means outside the enclosure. With a driving means accessible from outside an easy maintenance of the driving means is possible.

With a shielding means for protecting the gimbal suspension and/or the actuating rods against heat and/or dust in the enclosure the resistance against heat and dust inside the enclosure is further increased.

The present invention will be described exemplarily by reference to the accompanying drawings Figs. 1 to 4 wherein like reference numerals refer to like elements, in which
Fig. 1 depicts a 3D view of the inventive device for charging material,
Fig. 2 shows an arrangement of the inventive device in a furnace,
Fig. 3 is a top view of the inventive device and
Fig. 4 is a schematic top view of the inventive device.

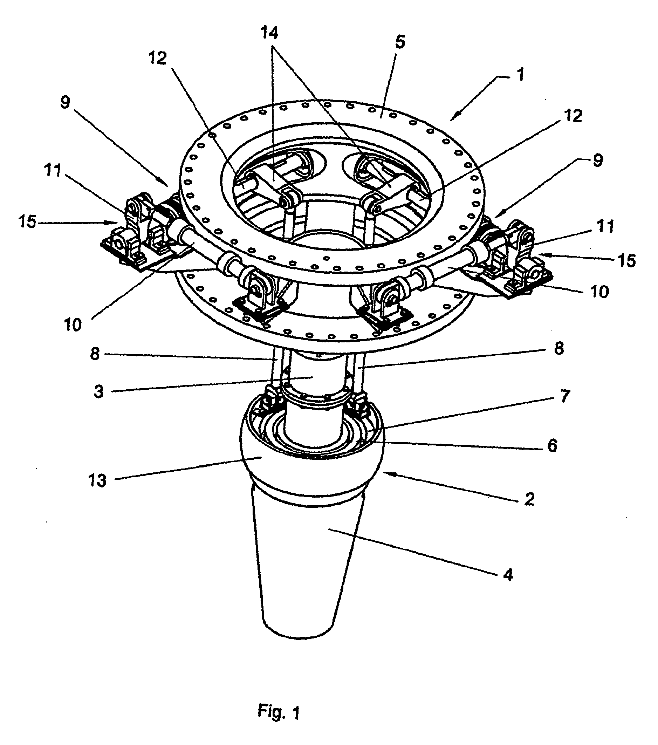

The distribution device 1, as best shown in Fig. 1, comprises a fixed charging means 3 in form of a tubular chute, which one end is mounted to a flange 5 for fixing the device into an operating position, e.g. into a blast furnace. At the other end of the fixed charging means 3 in form of a chute a gimbal suspension 2 is provided at which a movable charging means 4 in form of a tubular spout is mounted.

The gimbal suspension 2 comprises an inner ring 6 and an outer ring 7. The inner ring 6 is tiltably arranged on its inner side on two tilting means 21 in form of bolts or trunnions, e.g. on bearings, which are mounted to the fixed charging means 3 in form of a tubular chute. The two tilting means 21 in form of bolts are arranged oppositely thus forming a first axis of rotation 23 around which the inner ring 6 can be tilted with respect to the fixed charging means 3 in form of a chute. On the outer side of the inner ring 6 two further tilting means 20 in form of bolts or trunnions are arranged on which the outer ring 7 is tiltably arranged, e.g. on bearings, thus forming a second axis of rotation 22 around which the outer ring 7 can be tilted with respect to the inner ring 6. The movable charging means 4 in form of a spout is mounted to the outer ring 7 and hence is moved together with the outer ring 7. The fixed charging means 3 in form of a chute, the inner ring 6, the outer ring 7 and the movable charging means 4 in form of a chute are arranged substantially concentric. The movable charging means 4 in form of a spout can be moved to any point of a motion area, defined by the maximum allowed tilting range of the inner ring 6 and outer ring 7 and the length of the movable charging means 4 in form of a spout, simply by superposition of the tilting motions of the inner and outer ring 6, 7. Hence, charging material which is fed through the fixed charging means 3 in form of a chute and moveable charging means 4 in form of a spout can be distributed inside the enclosure 30 according to a predefined pattern by controlling the movement of the moveable charging means 4 in form of a spout.

For actuating the gimbal suspension 2 an actuating means 15 is provided, in the example shown comprising of two actuating rods 8 and two driving means each comprising a movement transformation means 9 and a pressure cylinder 10. The pressure cylinder 10 is arranged basically horizontally and is articulated with a lever 11 fixed to a shaft 12. A second lever 14 is fixed to the shaft 12 and is rotated together with the shaft. The second lever 14 is articulated with the actuating rod 8 which is articulated with the outer ring 7 and is basically arranged vertically. Therefore, the horizontal movement of the pressure cylinder 10 is transformed into a substantially vertical movement of the actuating rod 8 by the movement transformation means 9, comprising of the levers 11, 14 and a shaft 12. But it is obvious that the actuating means or movement transformation means could also be arranged differently or could comprise additional or other components as described above. It is further possible that the pressure cylinders 10 act directly on the inner or outer ring 6, 7, without movement transformation means 9 and actuating rods 8.

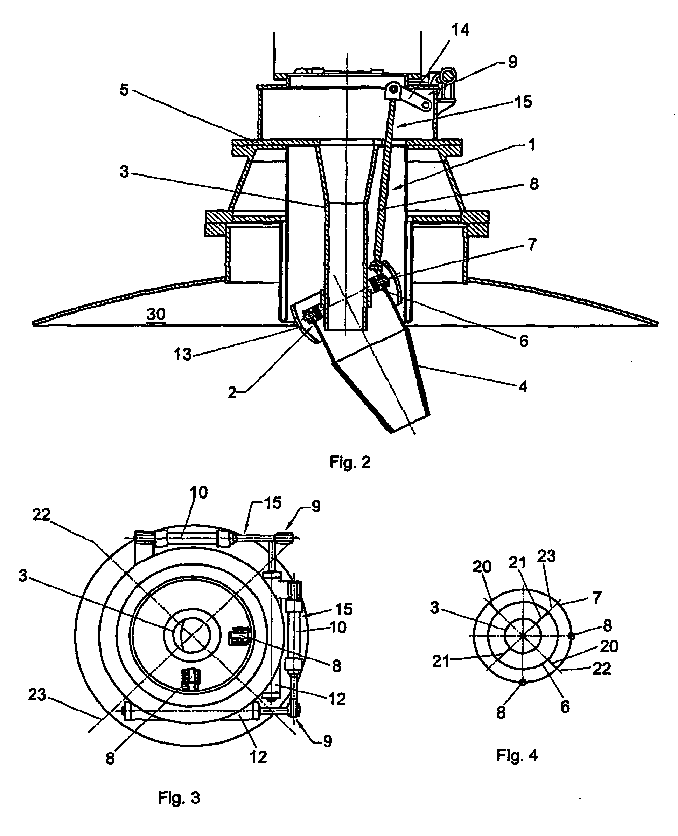

The first axis of rotation 23 and second axis of rotation 22 are advantageously arranged perpendicular, as best seen from Fig. 4. The actuating rods 8 are attached to the outer ring 7 angularly displaced from the axes of rotation 22, 23 whereat the angular displacement of the actuating rods 8 is preferably 90° and the angular displacement of the actuating rods 8 to the axes of rotation 22, 23 is preferably ±45° or 0°, but may be in the range of 0° to ±90°. With such an arrangement the movement of the inner ring 6 and outer ring 7 and therefore also of the movable charging means 4 in form of a spout can easily be described by basic mutual dependent mathematical functions. This allows for an easy integration into a charging material distribution control system and the position of the outer ring 7 (and consequently also of the movable charging means 4 in form of a tubular spout) can easily be controlled in a high speed closed loop control system to achieve a smooth movement of the movable charging means 4 in form of a spout.

Furthermore, a shielding means 13 is provided around the inner and outer ring 6, 7 in order to protect the gimbal suspension 2 against heat and dust in the enclosure 30. The shielding means 13 can be a ring surrounding the gimbal suspension 2 or part thereof. The shielding means 13 can also be used to protect the actuating rods 8 or parts thereof.

The actuating drive, comprising the pressure cylinder 10 and the movement transformation means 9, is separated from the gimbal suspension 2 and can be arranged outside the enclosure. This allows that single parts of the distribution device 1 can be replaced or maintained without the need of replacing or dismantling the complete distribution device 1.

Figs. 2 and 3 show the charging material distribution device in its operation position on top of a enclosure 30 in form of a furnace (or reactor or similar) with top charging. Charging material, e.g. coal, is fed through a feeding conduct (not shown), e.g. a coal screw conveyor, and falls down into the fixed charging means 3 in form of a chute and further into the moveable charging means 4 in form of a spout. By moving the movable charging means 4 in form of a spout with the actuating means according a certain pattern the charging material can be distributed in the enclosure 30 in form of a furnace.

## Claims

1. Device for distributing material in an enclosure (30) comprising a fixed charging means (3), a movable charging means (4), the movable charging means (4) being suspended on gimbals, and at least one actuating means (15) for actuating the gimbal suspension (2), **characterized in that** an inner ring (6) of the gimbal suspension (2) is tiltably arranged on two tilting means (21) which are mounted on the fixed charging means (3) forming a first axis of rotation (23), an outer ring (7) of the gimbal suspension (2) is tiltably arranged on further two tilting means (20) which are mounted on the inner ring (6) forming a second axis of
rotation (22), the outer ring (7) being attached to the moveable charging means (4), wherein two actuating means (15) are provided, each of which comprises an actuating rod (8) and/or a pressure cylinder (10), the two actuating rods (8) or the two pressure cylinders (10) being angularly displaced and attached to the outer ring (7) or being attached to the outer and to the inner ring (6).

2. Device according to claim 1, **characterized in that** the actuating rods (8) being angularly displaced from the first and second axis of rotation (22, 23).

3. Device according to one of claims 1 to 2, **characterized in that** the first and second axis of rotation (22, 23) being arranged perpendicularly.

4. Device according to one of claims 1 to 3, **characterized in that** the angular displacement of the first actuating rod (8) to the second actuating rod (8) is substantially 90°.

5. Device according to claim 4, **characterized in that** the angular displacement of the first actuating rod (8) to the first axis of rotation (23) is in the range of 0° to ±90°, preferably substantially ±45°.

6. Device according to one of claims 1 to 5, **characterized in that** the actuating rods (8) are arranged substantially vertically.

7. Device according to one of claims 1 to 6, **characterized in that** a driving means is provided for each of the actuating rods (8) for moving the actuating rods (8) substantially vertically.

8. Device according to claim 7, **characterised in that** the driving means comprises a pressure cylinder (10), preferably arranged substantially horizontally, and a movement transformation means (9) for transforming the, preferably horizontal, movement of the pressure cylinder (10) into the substantially vertical movement of the actuating rod (8).

9. Device according to one of claims 1 to 8, **characterized in that** the moveable charging means (4) comprises a tubular spout.

10. Device according to one of claims 1 to 9, **characterised in that** a shielding means (13) is provided for protecting the gimbal suspension (2) and/or the actuating rods (8) against heat and/or dust in the enclosure (30).

11. Device according to one of claims 1 to 10, **characterised in that** a control system, preferably a high speed closed loop control system, is provided for controlling the movement of the moveable charging means (4).

12. Use of the device according to claims 1 to 11 for distributing charging material in a reactor, like a shaft or metallurgical aggregate reactor, or in a furnace, e.g. a blast furnace, or in a melter gasifier or in a reduction shaft.

## Patentansprüche

1. Vorrichtung zum Verteilen von Material in einer Einfassung (30), wobei die Vorrichtung ein stationäres Befüllmittel (3), ein bewegliches Befüllmittel (4), wobei das bewegliche Befüllmittel (4) an Kardangelenken aufgehängt ist, und mindestens ein Betätigungsmittel (15) zum Betätigen der Kardangelenkaufhängung (2) umfasst, **dadurch gekennzeichnet, dass** ein Innenring (6) der Kardangelenkaufhängung (2) kippbar an zwei Kippmitteln (21) angeordnet ist, welche an dem stationären Befüllmittel (3) angebracht sind und eine erste Drehachse (23) bilden, und ein Außenring (7) der Kardangelenkaufhängung (2) kippbar an zwei weiteren Kippmitteln (20) angeordnet ist, welche an dem Innenring (6) angebracht sind und eine zweite Drehachse (22) bilden, wobei der Außenring (7) an dem beweglichen Befüllmittel (4) befestigt ist, wobei zwei Betätigungsmittel (15) vorgesehen sind, von denen jedes einen Betätigungsstab (8) und/oder einen Druckzylinder (10) umfasst, wobei die zwei Betätigungsstäbe (8) oder die zwei Druckzylinder (10) winkelversetzt sind und an dem Außenring (7) befestigt sind oder an dem Außen- und an dem Innenring (6) befestigt sind.

2. Vorrichtung nach Anspruch 1, **dadurch gekennzeichnet, dass** die Betätigungsstäbe (8) bezüglich der ersten und zweiten Drehachse (22, 23) winkelversetzt sind.

3. Vorrichtung nach Anspruch 1 bis 2, **dadurch gekennzeichnet, dass** die erste und zweite Drehachse (22, 23) senkrecht angeordnet sind.

4. Vorrichtung nach einem der Ansprüche 1 bis 3, **dadurch gekennzeichnet, dass** der Winkelversatz des ersten Betätigungsstabes (8) zum zweiten Betätigungsstab (8) im Wesentlichen 90° beträgt.

5. Vorrichtung nach Anspruch 4, **dadurch gekennzeichnet, dass** der Winkelversatz des ersten Betätigungsstabes (8) zur ersten Drehachse (23) im Bereich von 0° bis ±90° liegt und vorzugsweise im Wesentlichen ±45° beträgt.

6. Vorrichtung nach einem der Ansprüche 1 bis 5, **dadurch gekennzeichnet, dass** die Betätigungsstäbe (8) im Wesentlichen vertikal angeordnet sind.

7. Vorrichtung nach einem der Ansprüche 1 bis 6, **dadurch gekennzeichnet, dass** für jeden der Betätigungsstäbe (8) ein Antriebsmittel vorgesehen ist, um die Betätigungsstäbe (8) im Wesentlichen vertikal zu bewegen.

8. Vorrichtung nach Anspruch 7, **dadurch gekennzeichnet, dass** das Antriebsmittel einen vorzugsweise im Wesentlichen horizontal angeordneten Druckzylinder (10) und ein Bewegungsumwandlungsmittel (9) zum Umwandeln der vorzugsweise horizontalen Bewegung des Druckzylinders (10) in die im Wesentlichen vertikale Bewegung des Betätigungsstabes (8) umfasst.

9. Vorrichtung nach einem der Ansprüche 1 bis 8, **dadurch gekennzeichnet, dass** das bewegliche Befüllmittel (4) einen rohrförmigen Ausgießer umfasst.

10. Vorrichtung nach einem der Ansprüche 1 bis 9, **dadurch gekennzeichnet, dass** ein Abschirmmittel (13) vorgesehen ist, um die Kardangelenkaufhängung (2) und/oder die Betätigungsstäbe (8) vor Hitze und/oder Staub in der Einfassung (30) zu schützen.

11. Vorrichtung nach einem der Ansprüche 1 bis 10, **dadurch gekennzeichnet, dass** ein Steuerungssystem, vorzugsweise ein Hochgeschwindigkeitsregelsystem, zur Steuerung der Bewegung des beweglichen Befüllmittels (4) vorgesehen ist.

12. Verwendung der Vorrichtung nach den Ansprüchen 1 bis 11 zum Verteilen von Befüllmaterial in einem Reaktor, wie einem Schachtreaktor oder einem Reaktor für metallurgische Zuschlagstoffe, oder in einem Ofen, z. B. einem Hochofen, oder in einem Einschmelzvergaser oder in einem Reduktionsschacht.

## Revendications

1. Dispositif de distribution d'un matériau dans une enceinte (30) comprenant un moyen de chargement fixe (3), un moyen de chargement mobile (4), le moyen de chargement mobile (4) étant suspendu à la cardan, et au moins un moyen d'actionnement (15) pour actionner la suspension à la cardan (2), **caractérisé en ce qu'**une couronne intérieure (6) de la suspension à la cardan (2) est montée basculante sur deux moyens de basculement (21) montés sur le moyen de chargement fixe (3) en formant un premier axe de rotation (23), une couronne extérieure (7) de la suspension à la cardan (2) est montée basculante sur deux autres moyens de basculement (20) montés sur la couronne intérieure (6) en formant un second axe de rotation (22), la couronne extérieure (7) étant fixée au moyen de chargement mobile (4),
dans lequel deux moyens d'actionnement (15) sont utilisés, chacun comprenant une tige d'actionnement (8) et/ou un cylindre à air comprimé (10), les deux tiges d'actionnement (8) ou les deux cylindres à air comprimé (10) étant décalés angulairement et fixés à la couronne extérieure (7) ou fixés aux couronnes extérieure (7) et intérieure (6).

2. Dispositif selon la revendication 1, **caractérisé en ce que** les tiges d'actionnement (8) sont décalées angulairement par rapport aux premier et second axes de rotation (22, 23).

3. Dispositif selon l'une des revendications 1 à 2, **caractérisé en ce que** les premier et second axes de rotation (22, 23) sont perpendiculaires.

4. Dispositif selon l'une des revendications 1 à 3, **caractérisé en ce que** le décalage angulaire de la première tige d'actionnement (8) par rapport à la seconde tige d'actionnement (8) est sensiblement de 90°.

5. Dispositif selon la revendication 4, **caractérisé en ce que** le décalage angulaire de la première tige d'actionnement (8) par rapport au premier axe de rotation (23) est compris dans l'intervalle allant de 0° à ±90°, de préférence sensiblement de ±45°.

6. Dispositif selon l'une des revendications 1 à 5, **caractérisé en ce que** les tiges d'actionnement (8) sont disposées sensiblement verticalement.

7. Dispositif selon l'une des revendications 1 à 6, **caractérisé en ce qu'**un moyen d'entraînement est associé à chacune des tiges d'actionnement (8) pour déplacer les tiges d'actionnement (8) sensiblement verticalement.

8. Dispositif selon la revendication 7, **caractérisé en ce que** le moyen d'entraînement comprend un cylindre à air comprimé (10), disposé de préférence sensiblement horizontalement, et un moyen de conversion de mouvement (9) pour convertir le mouvement, de préférence horizontal, du cylindre à air comprimé (10) en mouvement sensiblement vertical de la tige d'actionnement (8).

9. Dispositif selon l'une des revendications 1 à 8, **caractérisé en ce que** le moyen de chargement mobile (4) comprend un bec tubulaire.

10. Dispositif selon l'une des revendications 1 à 9, **caractérisé en ce qu'**un moyen de garde (13) est utilisé pour protéger la suspension à la cardan (2) et/ou les tiges d'actionnement (8) de la chaleur et/ou de la poussière dans l'enceinte (30).

11. Dispositif selon l'une des revendications 1 à 10, **caractérisé en ce qu'**un système de commande, de préférence un système de commande en boucle fermée à grande vitesse, est utilisé pour commander le mouvement du moyen de chargement mobile (4).

12. Utilisation du dispositif selon les revendications 1 à 11 pour distribuer un matériau de chargement dans un réacteur, tel qu'un réacteur à cuve ou à agrégats métallurgiques, ou dans un fourneau, par ex. un haut-fourneau, ou dans un réacteur de fusion-gazéification ou dans une cuve de réduction.
